# EUROPÄISCHE PATENTSCHRIFT

(11) **EP 2 151 027 B1**
(45) Veröffentlichungstag und Bekanntmachung des Hinweises auf die Patenterteilung: **18.01.2017**
(21) Anmeldenummer: 08758756.4
(22) Anmeldetag: 26.05.2008
(51) Int. Cl.: H02B 1/56

(54) **HOCHSPANNUNGSSCHALTANLAGE**
HIGH-VOLTAGE SWITCHGEAR
INSTALLATION DE DISTRIBUTION HAUTE TENSION

(30) Priorität: 31.05.2007 DE 102007025536; 02.10.2007 DE 102007047200
(43) Veröffentlichungstag der Anmeldung: 10.02.2010
(73) Patentinhaber: ABB Schweiz AG, 5400 Baden (CH)
(72) Erfinder: BETZ, Thomas, 63505 Langenselbold (DE); ILANGO, Gnanadhandapani, CH-8052 Zürich (CH); GRANATA, Carlo, I-26824 Canevago d'Adda (IT); WILHELM, Wolfgang, 68542 Heddesheim (DE)
(74) Vertreter: ABB Patent Attorneys
(86) Internationale Anmeldenummer: PCT/EP2008/004167
(87) Internationale Veröffentlichungsnummer: WO 2008/145324

(56) Entgegenhaltungen:
- EP-A- 0 872 931
- EP-A- 1 569 310
- WO-A-01/67573
- WO-A-2006/066785

## Beschreibung

Die Erfindung betrifft eine metallgekapselte gasisolierte Hochspannungsschaltanlage gemäß dem Oberbegriff des Anspruchs 1.

Es ist bekannt, in gasisolierten Hochspannungsanlagen mit Bemessungsspannungen von 200 kV und mehr einphasig gekapselte Leistungsschalter zu verwenden, welche je über ein separates Kapselungsgehäuse und einen separaten Antrieb verfügen.

Aus der EP 0872931 A2 und der EP 1569310 A1 sind solche metallgekapselte gasisolierte Hochspannungsschaltanlagen bekannt, welche einphasig gekapselte Leistungsschalter und einphasig gekapselte Sammelschienen aufweisen. Die Leistungsschalter sind dabei liegend in einer Ebene angeordnet, wobei die Gehäuse der Sammelschienen oberhalb der Leistungsschalter angeordnet sind. Jede Sammelschiene umfasst drei parallel zueinander angeordnete Gehäuse, nämlich je ein Gehäuse pro Phasenleiter, wobei die Längsachsen dieser Gehäuse rechwinklig zu den Längsachsen der Leistungsschalter verlaufen.

Ein solche Hochspannungsschaltanlage hat einen verhältnismäßig hohen Platzbedarf, insbesondere weil zwischen den einzelnen Komponenten ein nicht nutzbarer leerer Raum verbleibt.

In der WO 2008/145324 A2 wird eine gasisolierte Hochspannungsschaltanlage beschrieben, bei der mindestens eine Sammelschiene, welche drei Phasenleiter aufweist, zusammen mit drei, jeweils einem der Phasenleiter zugeordneten Sammelschienentrennern in einem gemeinsamen Gehäuse eines dreiphasigen Sammelschienenmoduls angeordnet sind. Zur Verbindung des Sammelschienenmoduls mit drei, je in einem separaten Leistungsschaltergehäuse angeordneten Leistungsschaltern ist ein Aufteilmodul vorgesehen, welches über eine dreiphasige Schnittstelle sowie drei einphasige Schnittstellen verfügt, die je einen Flanschstutzen umfassen. Zur Verbindung der drei Leistungsschaltergehäuse mit einer dreiphasigen Abgangseinheit ist außerdem ein weiteres Aufteilmodul vorgesehen, welches ebenfalls über drei einphasige Schnittstellen sowie eine dreiphasige Schnittstelle verfügt.

Aufgabe der Erfindung ist es, eine Hochspannungsschaltanlage der eingangs genannten Art vorteilhaft auszugestalten.

Diese Aufgabe wird erfindungsgemäß durch eine Hochspannungsschaltanlage mit den im Anspruch 1 genannten Merkmalen gelöst.

Die mindestens eine Sammelschiene ist in einem dreiphasig gekapselten Sammelschienengehäuse angeordnet, das heißt, alle drei Phasenleiter der Sammelschiene befinden sich in einer gemeinsamen Kapselung. Zur Verbindung der Leistungsschalter mit dem Sammelschienengehäuse ist ein Sammelschienenaufteilmodul vorgesehen, welches über drei einphasige Anschlussflansche zum Anschluss der Leistungsschalter und über mindestens einen dreiphasigen Anschlussflansch zum Anschluss des Sammelschienengehäuses verfügt. Zur Verbindung der Leistungsschalter mit einem dreiphasig gekapselten Abgangsgehäuse ist ein Abgangsaufteilmodul vorgesehen, welches über drei einphasige Anschlussflansche und über mindestens einen dreiphasigen Flansch verfügt. Das Sammelschienenaufteilmodul sowie das Abgangsaufteilmodul sind dabei so angeordnet, dass die einphasigen Anschlussflansche nach unten weisen.

Unter einem einphasigen Anschlussflansch ist in diesem Zusammenhang ein Anschlussflansch zu verstehen, durch welchen ein einzelner Phasenleiter hindurch geführt ist. Unter einem dreiphasigen Anschlussflansch ist in diesem Zusammenhang ein Anschlussflansch zu verstehen, durch welchen drei Phasenleiter eines Drehstromsystems hindurch geführt sind.

Durch diese Anordnung ist der Platzbedarf der Hochspannungsschaltanlage vorteilhaft verringert.

Einer der dreiphasigen Flansche des Abgangsaufteilmoduls ist ein nach oben weisender Verbindungsflansch. Das Abgangsgehäuse verfügt über einen nach oben weisenden Flansch. Ein nach oben weisender Spannungswandler ist entweder mit dem Abgangsgehäuse verbunden oder an dem Verbindungsflansch des Abgangsaufteilmoduls bzw. an einem nach oben weisenden Adapterflansch eines auf dem Abgangsaufteilmodul vorgesehenen Winkelmoduls befestigt, so dass ein freier nach oben weisender Flansch zum Anschluss eines Prüfadapters zur Durchführung einer Hochspannungsprüfung zur Verfügung steht.

Zu der mindestens einen Sammelschiene gehörende Trenner und Erder sind vorteilhaft in dem Sammelschienengehäuse angeordnet. Diese mechanisch beweglichen Elemente sind somit verhältnismäßig leicht zugänglich für Wartungs- oder Reparaturzwecke. In dem Sammelschienenaufteilmodul, welches von anderen Komponenten wie Sammelschienengehäuse und Leistungsschalter umgeben und somit verhältnismäßig schwer zugänglich ist, sind keine mechanisch bewegte, wartungsbedürftige Elemente vorgesehen.

Gemäß einer vorteilhaften Ausgestaltung der Erfindung ist zwischen dem Abgangsaufteilmodul und den Leistungsschaltern je ein Verfängerungsrohr pro Phase vorgesehen. Der Einsatz solcher Verlängerungsrohre gestattet eine in der Höhe variable Positionierung des Flansches zum Anschluss des Abgangsgehäuses. Dies ist beispielsweise beim Einsatz in einem Kabelabgangsfeld vorteilhaft, da der Anschlussflansch eines Kabelabgangsgehäuse bauartbedingt sich in einer vorgegebene Mindesthöhe über dem Boden befindet. Ein weiterer Vorteil ist, dass in den Verlängerungsrohren je ein Stromwandler vorsehbar ist.

Alternativ oder zusätzlich zu den Verlängerungsrohren ist auf dem Abgangsaufteilmodul ein Winkelmodul vorgesehen, an welchem ein Adapterflansch zum Anschluss eines Spannungswandlers oder eines Prüfadapters sowie ein Abgangsflansch zum Anschluss des Abgangsgehäuses vorgesehen sind.

Gemäß einer weitern vorteilhaften Ausgestaltung der Erfindung ist zwischen dem Sammelschienenaufteilmodul und dem Abgangsaufteilmodul ein Laufsteg vorgesehen, welcher sich parallel zu dem Sammelschienengehäuse erstreckt. Ein solcher Laufsteg erleichtert die Zugänglichkeit zu weitern Komponenten der Hochspannungsschaltanlage wie beispielsweise Antriebskästen oder Stromwandlern.

In einer vorteilhaften Weiterbildung sind an dem Sammelschienenaufteilmodul mindestens vier dreiphasige Anschlussflansche zum Anschluss je eines Sammelschienengehäuses vorgesehen. Ein solches Sammelschienenaufteilmodul, welches auch als Vierfachsammelschienenaufteilmodul bezeichnet wird, ermöglicht einen vergleichsweise flexiblen Betrieb der Hochspannungsschaltanlage. Beispielsweise können alle vier angeschlossenen Sammelschienen unabhängig voneinander geschaltet werden. Dabei können beispielsweise drei Sammelschienen in Betrieb sein während die vierte Sammelschiene als Reserve genutzt wird. Es ist auch denkbar, je zwei Sammelschienen parallel zu schalten und als Sammelschienenpaar zu betreiben. Hierdurch verfügt die Hochspannungsschaltanlage über zwei Sammelschienenpaare mit dem Vorteil, dass der Bemessungsstrom eines Sammelschienenpaars doppelt so hoch ist wie der Bemessungsstrom einer einzelnen Sammelschiene.

Das Sammelschienenaufteilmodul hat üblicherweise einen annähernd zylinderförmigen Gehäusekörper und mindestens vier dreiphasige Anschlussstutzen, welche in radialer Richtung aus dem Gehäusekörper des Sammelschienenaufteilmoduls herausragen. Dabei ist an jedem Anschlussstutzen je ein dreiphasiger Anschlussflansch befestigt.

Jeder der dreiphasigen Anschlussstutzen des Sammelschienenaufteilmoduls ist dabei zu dem jeweils benachbarten dreiphasigen Anschlussstutzen sowohl in axialer Richtung als auch in Umfangsrichtung bezüglich des Gehäusekörpers versetzt angeordnet. Durch diese Versetzung der dreiphasigen Anschlussstutzen in axialer Richtung und in Umfangsrichtung wird eine Kollision der dreiphasigen Anschlussflansche miteinander vermieden.

Weitere vorteilhafte Ausgestaltungen der Erfindung sind den abhängigen Ansprüchen zu entnehmen.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

Es zeigen:
- Fig. 1: ein erstes Kabelabgangsfeld einer erfindungsgemäßen Schaltanlage,
- Fig. 2: ein zweites Kabelabgangsfeld einer erfindungsgemäßen Schaltanlage in perspektivischer Darstellung,
- Fig. 3: ein drittes Kabelabgangsfeld einer erfindungsgemäßen Schaltanlage,
- Fig. 4: das erste Kabelabgangsfeld aus Fig. 1 in Frontansicht,
- Fig. 5: ein Vierfachsammelschienenaufteilmodul in Seitenansicht,
- Fig. 6: ein Vierfachsammelschienenaufteilmodul mit angeschlossenen Sammelschienen und
- Fig. 7: ein Vierfachsammelschienenaufteilmodul in Frontansicht.

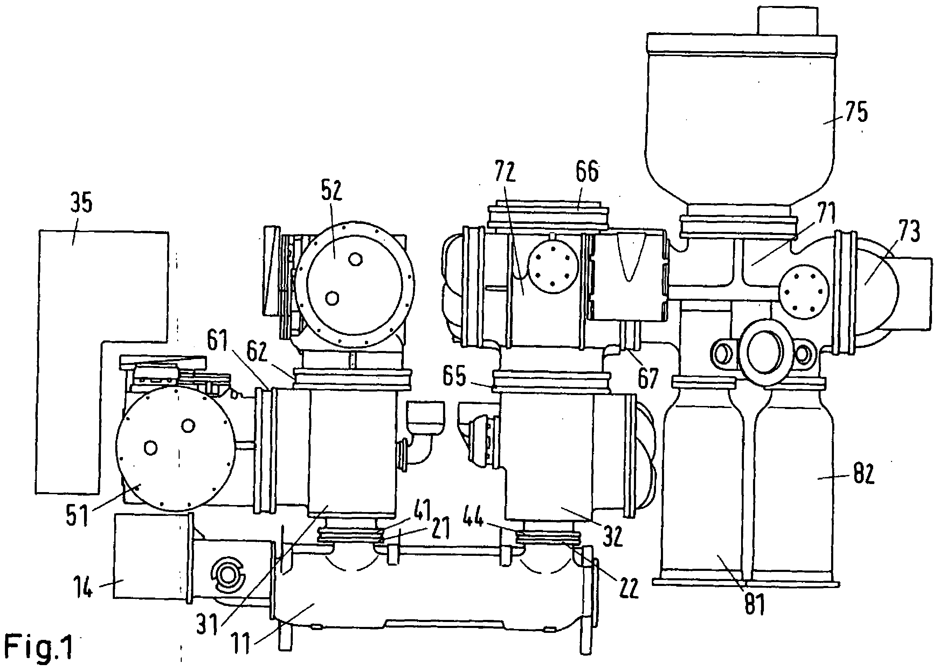

Fig. 1 zeigt ein erstes Kabelabgangsfeld einer erfindungsgemäßen Schaltanlage. Drei einphasig gekapselte Leistungsschalter 11, 12, 13, von denen in der gezeigten Darstellung nur der erste Leistungsschalter 11 sichtbar ist, sind so angeordnet, dass ihre Längsachsen parallel zueinander und parallel zum Erdboden verlaufen. In anderen Worten ausgedrückt, sind die einphasigen Leistungsschalter 11, 12, 13 liegend angeordnet. Der Abstand der Leistungsschalter 11, 12, 13 zum Erdboden ist dabei gleich.

Die Leistungsschalter 11, 12, 13 sind bodennah angeordnet, was im folgenden als "unten" bezeichnet wird. Entsprechend wird die Lage der bodenfern angeordneten Komponenten als "oben" bezeichnet.

Der erste Leistungsschalter 11 verfügt über einen der Frontseite des Kabelabgangsfeldes benachbarten Eingangsflansch 21 und über einen der Rückseite des Kabelabgangsfeldes benachbarten Ausgangsflansch 22, welche parallel zum Erdboden ausgerichtet sind und nach oben weisen.

Zur Verbindung der Leistungsschalter 11, 12, 13 mit einem ersten Sammelschienengehäuse 51 und einem zweiten Sammelschienengehäuse 52 ist ein Sammelschienenaufteilmodul 31 vorgesehen. Das Sammelschienenaufteilmodul 31 verfügt über drei einphasige Anschlussflansche 41, 42, 43, von denen in dieser Darstellung nur der erste einphasige Anschlussflansch 41 sichtbar ist. Weiterhin verfügt das Sammelschienenaufteilmodul 31 über einen ersten dreiphasigen Anschlussflansch 61 zum Anschluss des ersten Sammelschienengehäuses 51 und über einen zweiten dreiphasigen Anschlussflansch 62 zum Anschluss des zweiten Sammelschienengehäuses 52.

Der erste einphasige Anschlussflansch 41 des Sammelschienenaufteilmoduls 31, welcher nach unten weist, ist mit dem Eingangsflansch 21 des ersten Leistungsschalters 11 verbunden. Ebenso sind die übrigen einphasigen Anschlussflansche des Sammelschienenaufteilmoduls 31 mit den Eingangsflanschen des zweiten Leistungsschalters 12 und des dritten Leistungsschalters 13 verbunden.

Das Sammelschlenenaufteilmodul 31 ist so auf den Leistungsschaltern 11, 12, 13 montiert, dass die einphasigen Anschlussflansche 41, 42, 43 nach unten weisen. In anderen Worten ausgedrückt, ist das Sammelschienenaufteilmodul 31 stehend auf den Leistungsschaltern 11, 12, 13 angeordnet.

Der zweite dreiphasige Anschlussflansch 62 des Sammelschienenaufteilmoduls 31, welcher nach oben weist, ist mit dem zweiten Sammelschienengehäuse 52 verbunden. Der erste dreiphasige Anschlussflansch 61 des Sammelschienenaufteilmoduls 31, welcher zur Frontseite hin weist, ist mit dem ersten Sammelschienengehäuse 51 verbunden.

Das erste Sammelschienengehäuse 51 befindet sich also seitlich von dem Sammelschienenaufteilmodul 31, während sich das zweite Sammelschienengehäuse 52 oberhalb des Sammelschienenaufteilmoduls 31 befindet. Unterhalb des Sammelschienenaufteilmoduls 31 befinden sich die Leistungsschalter 11, 12, 13.

An jedem der Leistungsschalter 11, 12, 13 ist je ein Antrieb 14, 15, 16 frontseitig angebracht, von denen in dieser Darstellung nur der erste Antrieb 14 des ersten Leistungsschalters 11 sichtbar ist. Die Antriebe 14, 5, 16 befinden sich unter dem ersten Sammelschienengehäuse 51.

Ein Steuerschrank 35, welcher hier nicht näher bezeichnete Komponenten zur Steuerung und Überwachung des ersten Kabelabgangsfeld beinhaltet, weist ein L-förmig ausgebildetes Gehäuse auf und ist so angeordnet, dass er das erste Sammelschienengehäuse 51 teilweise übergreift. Der lange Schenkel des L-förmigen Steuerschranks 35 erstreckt sich dabei senkrecht zum Erdboden frontseitig neben dem ersten Sammelschienengehäuse 51 und weiter nach oben, während der kurze Schenkel des L-förmigen Steuerschranks 35 sich parallel zum Erdboden oberhalb des ersten Sammelschienengehäuses 51 und weiter zur Frontseite hin erstreckt. Der Steuerschrank 35 füllt somit den Raum oberhalb des ersten Sammelschienengehäuses 51 und frontseitig neben dem zweiten Sammelschienengehäuse 52 teilweise aus und passt sich der Anlagenkontur an.

Zur Verbindung der Leistungsschalter 11, 12, 13 mit einem Abgangsgehäuse 71 ist ein Abgangsaufteilmodul 32 vorgesehen. Das Abgangsaufteilmodul 32 verfügt über drei einphasige Anschlussflansche 44, 45, 46, von denen in dieser Darstellung nur der vierte einphasige Anschlussflansch 44 sichtbar ist. Weiterhin verfügt das Abgangsaufteilmodul 32 über einen dreiphasigen Verbindungsflansch 65, welcher nach oben weist, und mit einem Winkelmodul 72 verbunden ist.

Der vierte einphasige Anschlussflansch 44 des Abgangsaufteilmoduls 32, welcher nach unten weist, ist mit dem Ausgangsflansch 22 des ersten Leistungsschalters 11 verbunden. Ebenso sind die übrigen einphasigen Anschlussflansche des Abgangsaufteilmoduls 32 mit den Ausgangsflanschen des zweiten Leistungsschalters 12 und des dritten Leistungsschalters 13 verbunden.

Das Abgangsaufteilmodul 32 ist so auf den Leistungsschaltern 11, 12, 13 montiert, dass die einphasigen Anschlussflansche 44, 45, 46 nach unten weisen. In anderen Worten ausgedrückt, ist das Abgangsaufteilmodul 31 stehend auf den Leistungsschaltern 11, 12, 13 angeordnet.

Das Winkelmodul 72 besitzt einen nach oben weisenden dreiphasigen Adapterflansch 66, welcher in der gezeigten Darstellung verschlossen ist. An diesen Adapterflansch 66 kann beispielsweise ein Spannungswandler oder ein Prüfadapter zur Durchführung einer Hochspannungsprüfung angeschlossen werden.

Das Winkelmodul 72 befindet sich oberhalb des Abgangsaufteilmoduls 32 und rückseitig neben dem zweiten Sammelschienengehäuse 52.

Das Winkelmodul 72 besitzt ferner einen zur Rückseite weisenden dreiphasigen Abgangsflansch 67, an welchen das Abgangsgehäuse 71 angeschlossen ist. Am Abgangsgehäuse 71 sind dabei in bekannter Weise ein Spannungswandler 75 und ein Schnellerder 73 befestigt, wobei-der Spannungswandler 75 nach oben und der Schnellerder 73 zur Rückseite hin weist.

Am Abgangsgehäuse 71 sind ferner in bekannter Weise drei einphasige Hochspannungskabel 81, 82, 83 befestigt, wobei das dritte Hochspannungskabel 83 in dieser Darstellung nicht sichtbar ist. Die Hochspannungskabel 81, 82, 83 weisen nach unten.

Anstelle der drei einphasigen Hochspannungskabel 81, 82, 83 ist auch ein dreiphasiges Hochspannungskabel denkbar.

Zwischen je zwei Anschlussflanschen von miteinander verbundenen Komponenten des Schaltfeldes ist je ein Schottisolator vorgesehen. Ein solcher Schottisolator gewährleistet, dass zu Reparatur- oder Wartungszwecken ein Modul, beispielsweise das erste Sammelschienengehäuse 51, geöffnet und/oder entfernt werden kann, wobei das benachbarte Modul, beispielsweise das Sammelschienenaufteilmodul 31, unbeeinflusst bleibt. Das heißt, das Isoliergas kann in dem Sammelschienenaufteilmodul 31 verbleiben, da der Schottisolator den ersten dreiphasigen Anschlussflansch 61 abdichtet.

Das erste Sammelschienengehäuse 51 hängt frontseitig an dem Sammelschienenaufteilmodul 31 und das zweite Sammelschienengehäuse 52 liegt auf dem Sammelschienenaufteilmodul 31. Die Antriebe 14, 15, 16 der Leistungsschalter 11, 12, 13 befinden sich unterhalb des ersten Sammelschienengehäuses 51. Der Steuerschrank 35 ist L-förmig ausgebildet und füllt den Raum über dem ersten Sammelschienengehäuse 51 und neben dem zweiten Sammelschienengehäuse 52 teilweise aus.

Auf dem Abgangsaufteilmodul 32 steht das Winkelmodul 72, an welches rückseitig das Abgangsgehäuse 71 und die übrigen Komponenten eines Kabelabgangs in bekannter Weise anschließen.

In dieser Darstellung ist der Spannungswandler 75 mit dem Abgangsgehäuse 71 verbunden. Der. Spannungswandler 75 kann auch an den nach oben weisenden dreiphasigen Adapterflansch 66 des Winkelmoduls 72 angeschlossen werden. In diesem Fall verfügt das Abgangsgehäuse 71 über einen freien nach oben weisenden Flansch zum Anschluss eines Prüfadapters zur Durchführung einer Hochspannungsprüfung.

Diese hier beschriebene Anordnung der Komponenten in dem Kabelabgangsfeld nutzt den vorhandenen Raum optimal aus und gestattet so eine relativ kompakte und platzsparende Bauweise.

In diesem Beispiel ist ein Kabelabgangsfeld, da heißt ein Schaltfeld zum Anschluss an ein Hochspannungskabel, dargestellt. Die beschriebene Anordnung ist aber auch auf Schaltfeldtypen anwendbar, an welche beispielsweise eine Freileitung, ein Transformator oder ähnliches anschließbar sind.
In diesem Fall sind anstatt der Hochspannungskabel 81, 82, 83 entsprechende Komponenten vorgesehen, wobei das Abgangsgehäuses 71 zum Anschluss dieser Komponenten ausgebildet ist.

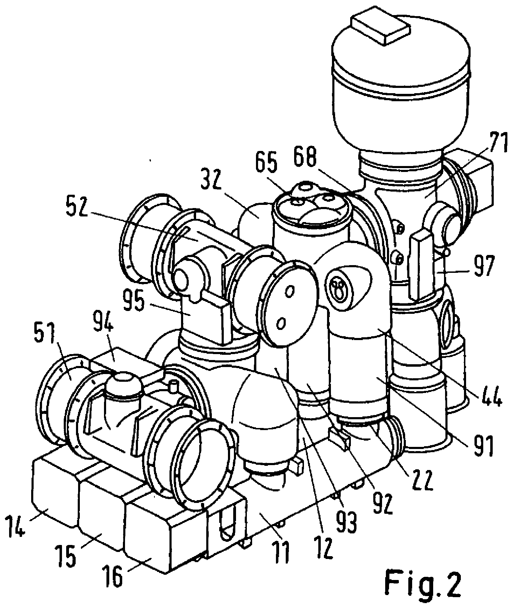

In Fig. 2 ist ein zweites Kabelabgangsfeld einer erfindungsgemäßen Schaltanlage in perspektivischer Darstellung gezeigt. Das hier gezeigte zweite Kabelabgangsfeld ähnelt dem in Fig. 1 gezeigten ersten Kabelabgangsfeld, weshalb hier in erster Linie auf Unterschiede eingegangen wird. Weiterhin werden Merkmale beschrieben, welche in dieser Darstellung besser sichtbar sind. Der Steuerschrank 35 ist in dieser Darstellung nicht gezeigt.

Zwischen den Leistungsschaltern 11,12, 13 und dem Abgangsaufteilmodul 32 ist pro Phase je ein Verlängerungsrohr 91, 92, 93 vorgesehen. Das erste Verlängerungsrohr 91 ist dabei mit dem vierten einphasigen Anschlussflansch 44 des Abgangsaufteilmoduls 32 und mit dem Ausgangsflansch 22 des ersten Leistungsschalters 11 verbunden. Das zweite Verlängerungsrohr 92 und das dritte Verlängerungsrohr 93 sind in ähnlicher Weise mit dem zweiten Leistungsschalter 12, beziehungsweise dem dritten Leistungsschalter 13 und dem Abgangsaufteilmodul 32 verbunden.

Das Abgangsaufteilmodul 32 ist so auf den Verlängerungsrohren 91, 92, 93 montiert, welche ihrerseits auf den Leistungsschaltern 11, 12, 13 montiert sind, dass die einphasigen Anschlussflansche 44, 45, 46 nach unten weisen. In anderen Worten ausgedrückt, ist das Abgangsaufteilmodul 31 stehend auf den Leistungsschaltern 11, 12, 13 angeordnet, wobei zwischen den Leistungsschaltern 11, 12, 13 und dem Abgangsaufteilmodul 32 die Verlängerungsrohre 91, 92, 93 angeordnet sind.

Das Winkelmodul 72 aus Fig. 1 entfällt. An den dreiphasigen Verbindungsflansch 65 des Abgangsaufteilmoduls 32, welcher in der gezeigten Darstellung verschlossen ist, kann beispielsweise ein Spannungswandler oder ein Prüfadapter zur Durchführung einer Hochspannungsprüfung angeschlossen werden.

Das Abgangsaufteilmodul 32 besitzt einen dreiphasigen Ausgangsflansch 68, welcher zur Rückseite hin weist. An diesen Ausgangsflansch 68 ist in bekannter Weise das Abgangsgehäuse 71 angeschlossen.

Auf dem ersten Sammelschienengehäuse 51 ist ein erster Antriebskasten 94 angeordnet. Dieser erste Antriebskasten 94 enthält die Antriebe sowie Anzeigeelemente für die in dem ersten Sammelschienengehäuse 51 befindlichen Trenner/Erder.

Frontseitig an dem zweiten Sammelschienengehäuse 52 ist ein zweiter Antriebskasten 95 angeordnet. Dieser zweite Antriebskasten 95 enthält die Antriebe sowie Anzeigeelemente für die in dem zweiten Sammelschienengehäuse 52 befindlichen Trenner/Erder.

Seitlich an dem Abgangsgehäuse 71 ist ein Abgangsantriebskasten 97 angeordnet. Dieser Abgangsantriebskasten 97 enthält die Antriebe sowie Anzeigeelemente für die in dem Abgangsgehäuse 71 befindlichen Trenner/Erder.

Die besagte Antriebskästen 94, 95, 97 sind so angeordnet, dass sie verhältnismäßig leicht zugänglich und sichtbar sind.

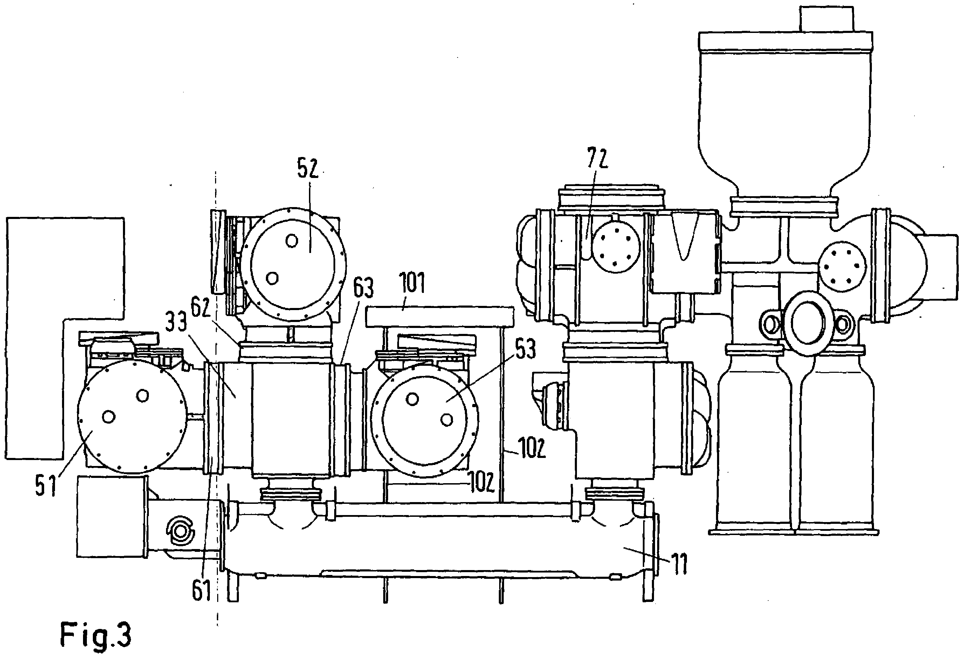

In Fig. 3 ist ein drittes Kabelabgangsfeld einer erfindungsgemäßen Schaltanlage dargestellt. Das hier gezeigte dritte Kabelabgangsfeld ähnelt dem in Fig. 1 gezeigten ersten Kabelabgangsfeld, weshalb hier in erster Linie auf Unterschiede eingegangen wird.

Ein auf den Leistungsschaltern stehendes Dreifachsammelschienenaufteilmodul 33 verfügt - im Vergleich zu dem Sammelschienenaufteilmodul 31 aus Fig. 1 - über einen weiteren, dritten dreiphasigen Anschlussflansch 63, welcher zur Rückseite hin weist und damit dem ersten dreiphasigen Anschlussflansch 61 gegenüberliegt.

An dem dritten dreiphasigen Anschlussflansch 63 ist ein drittes Sammelschienengehäuse 53 befestigt. Das dritte Sammelschienengehäuse 53 hängt also rückseitig an dem Dreifachsammelschienenaufteilmodul 33.

Die Leistungsschalter 11, 12, 13 haben eine im Vergleich zu der Darstellung in Fig. 1 vergrößerte axiale Ausdehnung, das heißt, sie sind länger. Somit ist zwischen dem Dreifachsammelschienenaufteilmodul 33 und dem Abgangsaufteilmodul 32 Platz für das dritte Sammelschienengehäuse 53 geschaffen.

Über dem dritten Sammelschienengehäuse 53 ist ein Laufsteg 101 vorgesehen, welcher auf Stelzen 102 ruht. Über diesen Laufsteg 101, welcher sich parallel zu den Sammelschienengehäusen 51, 52, 53 erstreckt, kann ein Bediener zu allen Teilen des dritten Sammelschienengehäuses 53 sowie zu allen Winkelmodulen 72 aller Schaltfelder der Schaltanlage gelangen.

In dem Sammelschienenaufteilmodul 31, in dem Abgangsaufteilmodul 32, in dem Dreifachsammelschienenaufteilmodul 33, sowie in den Verlängerungsrohren 91, 92, 93 sind in der Regel Stromwandler integriert. Die Anschlusskästen dieser Stromwandler sind über den Laufsteg 101 ebenfalls erreichbar.

Mittels des Laufstegs 101 ist somit die Zugänglichkeit zu diversen Komponenten der Schaltanlage erhöht.

Selbstverständlich ist das hier gezeigte Schaltanlage auch ohne Laufsteg ausführbar.

Weiterhin ist es denkbar, dass die dritte Sammelschiene und somit das dritte Sammelschienengehäuse 53 entfallen, so dass das Kabelabgangsfeld dem in Fig. 1 gezeigten ähnelt. In diesem Fall kann der Laufsteg 101 tiefer, beispielsweise unmittelbar über den Leistungsschaltern 11, 12, 13 angeordnet werden.

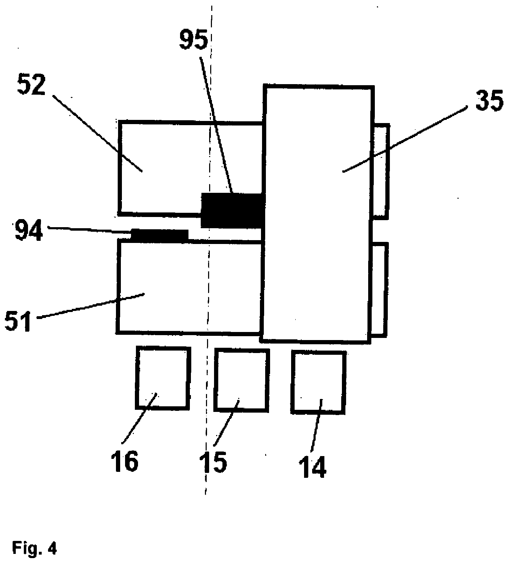

In Fig. 4 ist das erste Kabelabgangsfeld aus Fig. 1 in Frontansicht dargestellt. Das erste Sammelschienengehäuse 51 verläuft horizontal über den Antrieben 14, 15, 16 der hier nicht sichtbaren Leistungsschalter 11, 12, 13. Das zweite Sammelschienengehäuse 52 verläuft parallel zu und oberhalb des ersten Sammelschienengehäuses 51.

Anstelle des besagten Kabelabgangsfeldes ist natürlich auch ein anderes Schaltfeld denkbar, beispielsweise ein Einspeisefeld oder ein Freileitungsagbangsfeld.

Beide Sammelschienengehäuse 51, 52 sind teilweise von dem Steuerschrank 35 verdeckt. Der Steuerschrank 35 nimmt nur einen Teil, beispielsweise die Hälfte, der Breite des Schaltfeldes ein. Somit sind die Sammelschienen in dem Bereich seitlich des Steuerschranks 35 zugänglich. Insbesondere sind der erste Antriebskasten 94 des ersten Sammelschienengehäuses 51 und der zweite Antriebskasten 95 des zweiten Sammelschienengehäuses 52 sichtbar und zugänglich.

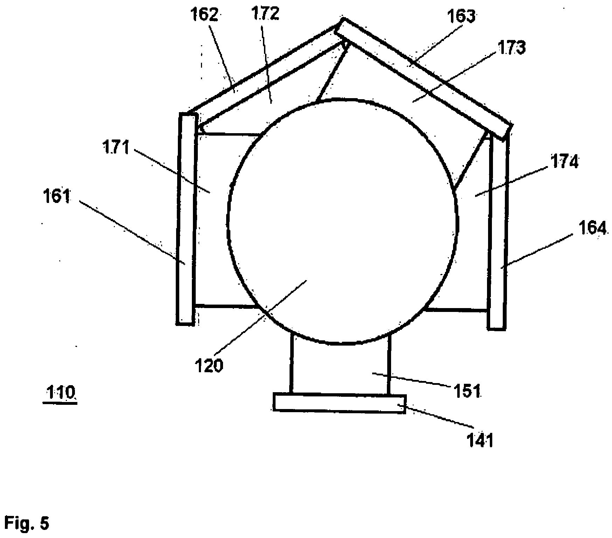

In Fig. 5 ist ein Vierfachsammelschienenaufteilmodul 110 in Seitenansicht dargestellt. Das Vierfachsammelschienenaufteilmodul 110 verfügt über einen annähernd zylinderförmigen Gehäusekörper 120, dessen annähernd kreisförmige Stirnseite in dieser D.arstellung sichtbar ist.

Das Vierfachsammelschienenaufteilmodul 110 dient zur Verbindung von drei hier nicht dargestellten einphasigen Leistungsschaltern mit bis zu vier hier nicht dargestellten Sammelschienen.

Das Vierfachsammelschienenaufteilmodul 110 verfügt hierfür über vier dreiphasige Anschlussflansche 161, 162, 163, 164 zum Anschluss je einer Sammelschiene und über drei einphasige Anschlussflansche 141, 142, 143 zum Anschluss je eines einphasigen Leistungsschalters.

Die einphasigen Anschlussflansche 141, 142, 143 sind je an einem einphasigen Anschlussstutzen 151, 152, 153 befestigt, welche von dem zylinderförmigen Gehäusekörper 120 des Vierfachsammelschienenaufteilmoduls 110 in radialer Richtung vorspringen.

Die dreiphasigen Anschlussflansche 161, 162, 163, 164 sind je an einem dreiphasigen Anschlussstutzen 171, 172, 173, 174 befestigt, welche ebenfalls von dem zylinderförmigen Gehäusekörper 120 des Vierfachsammelschienenaufteilmoduls 110 in radialer Richtung vorspringen.

Unter einem einphasigen Anschlussstutzen ist in diesem Zusammenhang ein Anschlussstutzen zu verstehen, durch welchen ein einzelner Phasenleiter hindurch geführt ist. Unter einem dreiphasigen Anschlussstutzen ist in diesem Zusammenhang ein Anschlussstutzen zu verstehen, durch welchen drei Phasenleiter eines Drehstromsystems hindurch zugeführt sind.

Die einphasigen Anschlussstutzen 151, 152, 153 sind auf einer Mantellinie des zylinderförmigen Gehäusekörpers 120 angeordnet.

In der gezeigten Darstellung sind der zweite einphasige Anschlussflansch 142, welcher an dem zweiten einphasigen Anschlussstutzen 152 befestigt ist, sowie der dritte einphasige Anschlussflansch 143, welcher an dem dritten einphasigen Anschlussstutzen 153 befestigt ist, von dem ersten einphasigen Anschlussflansch 141 verdeckt. Ebenso sind in der gezeigten Darstellung der zweite einphasige Anschlussstutzen 152 sowie der dritte einphasige Anschlussstutzen 153 von dem ersten einphasigen Anschlussstutzen 151 verdeckt, an welchem der erste einphasige Anschlussflansch 141 befestigt ist.

Die dreiphasigen Anschlussstutzen 171, 172, 173, 174 sind auf verschiedenen Mantellinien des zylinderförmigen Gehäusekörpers 120 angeordnet.

Der erste dreiphasige Anschlussstutzen 171, an welchem der erste dreiphasige Anschlussflansch 161 befestigt ist, ist dabei auf einer Mantellinie angeordnet, welche bezüglich der Mantellinie, auf welcher die einphasigen Anschlussstutzen 151, 152, 152 angeordnet sind, in Umfangsrichtung im Uhrzeigersinn um 90° versetzt ist.

Der zweite dreiphasige Anschlussstutzen 172, an welchem der zweite dreiphasige Anschlussflansch 162 befestigt ist, ist auf einer Mantellinie angeordnet, welche bezüglich der Mantellinie, auf welcher die einphasigen Anschlussstutzen 151, 152, 152 angeordnet sind, in Umfangsrichtung im Uhrzeigersinn um 150° versetzt ist.

Der dritte dreiphasige Anschlussstutzen 173, an welchem der dritte dreiphasige Anschlussflansch 163 befestigt ist, ist auf einer Mantellinie angeordnet, welche bezüglich der Mantellinie, auf welcher die einphasigen Anschlussstutzen 151, 152, 152 angeordnet sind, in Umfangsrichtung im Uhrzeigersinn um 210° versetzt ist.

Der vierte dreiphasige Anschlussstutzen 174, an welchem der vierte dreiphasige Anschlussflansch 164 befestigt ist, ist auf einer Mantellinie angeordnet, welche bezüglich der Mantellinie, auf welcher die einphasigen Anschlussstutzen 151, 152, 152 angeordnet sind, in Umfangsrichtung im Uhrzeigersinn um 270° versetzt ist.

Der erste dreiphasige Anschlussstutzen 171 und der vierte dreiphasige Anschlussstutzen 174 sind also auf Mantellinien des zylinderförmigen Gehäusekörpers 120 angeordnet, welche sich diametral gegenüberliegen. Die Mantellinien, auf welchen einander benachbarte dreiphasige Anschlussstutzen angeordnet sind, sind in Umfangsrichtung um jeweils 60° zueinander versetzt.

Die dreiphasigen Anschlussstutzen 171, 172, 173, 174 sind auch in axialer Richtung zueinander versetzt angeordnet. Der erste dreiphasige Anschlussstutzen 171 und der dritte dreiphasige Anschlussstutzen 173 sind in axialer Richtung auf einer Umfangslinie angeordnet. Der zweite dreiphasige Anschlussstutzen 172 und der vierte dreiphasige Anschlussstutzen 174 sind in axialer Richtung auf einer Umfangslinie angeordnet, wobei diese Umfangslinie bezüglich der Umfangslinie, auf welcher erste dreiphasige Anschlussstutzen 171 und der dritte dreiphasige Anschlussstutzen 173 angeordnet sind, in der gezeigten Darstellung nach hinten versetzt ist.

In der gezeigten Darstellung sind daher der zweite dreiphasige Anschlussstutzen 172 und der vierte dreiphasige Anschlussstutzen 174 sowie der zweite dreiphasige Anschlussflansch 162 und der vierte dreiphasige Anschlussflansch 164 teilweise von dem ersten dreiphasigen Anschlussstutzen 171 und dem dritten dreiphasige Anschlussstutzen 173 sowie von dem erste dreiphasigen Anschlussflansch 161 und dem dritten dreiphasigen Anschlussflansch 163 verdeckt.

Selbstverständlich sind auch Sammelschienenaufteilmodule mit fünf oder mehr dreiphasigen Anschlussflanschen zum Anschluss von fünf oder mehr Sammelschienen denkbar. Weiterhin ist es denkbar, die dreiphasigen Anschlussstutzen in Umfangsrichtung um einen anderen Winkel, beispielsweise 45°, zueinander zu versetzen.

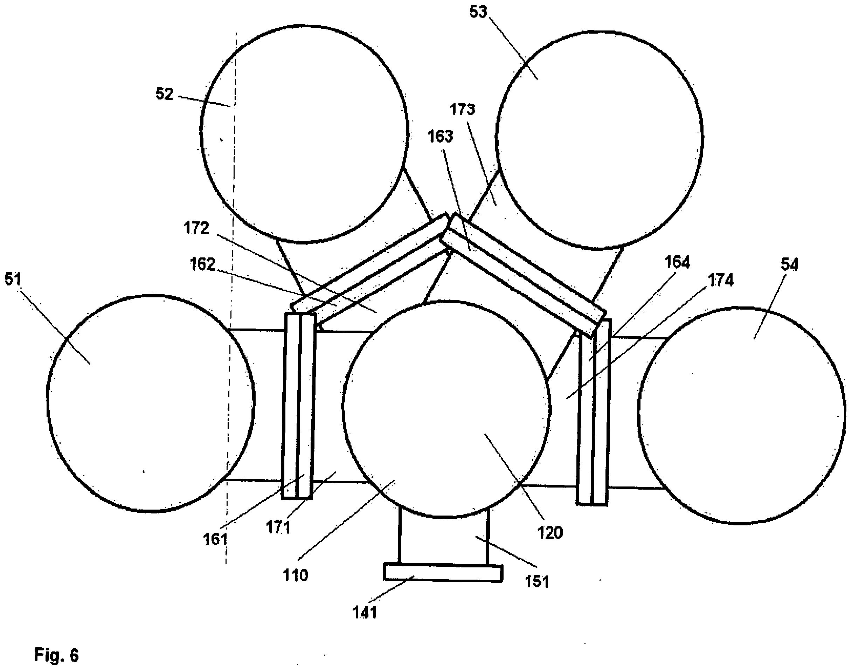

In Fig. 6 ist das in Fig. 5 erläuterte Vierfachsammelschienenaufteilmodul 110 mit angeschlossenen Sammelschienen dargestellt. Dabei sind an dem ersten dreiphasigen Anschlussflansch 161 ein erstes Sammelschienengehäuse 51, an dem zweiten dreiphasigen Anschlussflansch 162 ein zweites Sammelschienengehäuse 52, an dem dritten dreiphasigen Anschlussflansch 163 ein drittes Sammelschienengehäuse 53 und an dem vierten dreiphasigen Anschlussflansch 164 ein viertes Sammelschienengehäuse 54 angeschlossen.

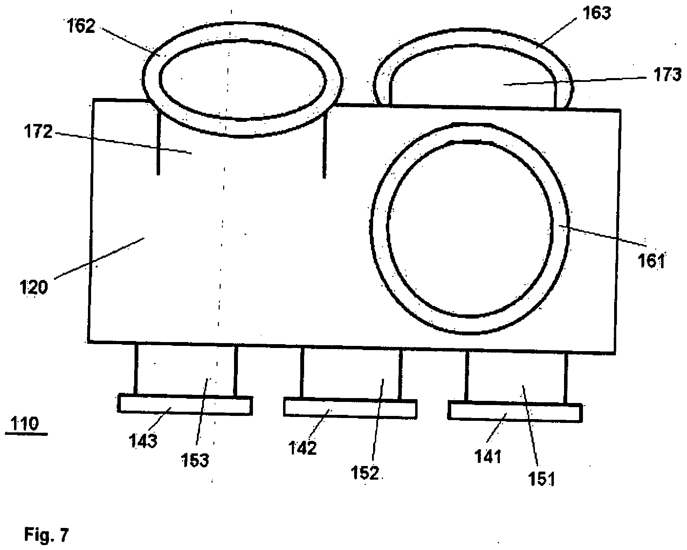

In Fig. 7 ist das in Fig. 5 erläuterte Vierfachsammeischienenaufteilmodul 110 in Frontansicht dargestellt.

Aus dem Gehäusekörper 120 des Vierfachsammelschienenaufteilmoduls 110 ragen der erste einphasige Anschlussstutzen 151, der zweite einphasige Anschlussstutzen 152 und der dritte einphasige Anschlussstutzen 153 in gleicher Richtung heraus. An dem ersten einphasige Anschlussstutzen 151 ist der erste einphasige Anschlussflansch 141, an dem zweiten einphasige Anschlussstutzen 152 der zweite einphasige Anschlussflansch 142 und an dem dritten einphasige Anschlussstutzen 153 der dritte einphasige Anschlussflansch 143 befestigt.

In Umfangsrichtung um 90° versetzt ist an dem zylinderförmigen. Gehäusekörper 120 der in dieser Darstellung nicht sichtbare erste dreiphasige Anschlussstutzen 171 mit dem ersten dreiphasigen Anschlussflansch, 161 angeordnet. Um weitere 60° in Umfangsrichtung versetzt ist an dem zylinderförmigen Gehäusekörper 120 der zweite dreiphasige Anschlussstutzen 172 mit dem zweiten dreiphasigen Anschlussflansch 162 angeordnet. Um weitere 60° in Umfangsrichtung versetzt ist an dem zylinderförmigen Gehäusekörper 120 der dritte dreiphasige Anschlussstutzen 173 mit dem dritten dreiphasigen Anschlussflansch 163 angeordnet. Der vierte dreiphasige Anschlussstutzen 174, welcher um weitere 60° in Umfangsrichtung versetzt an dem zylinderförmigen Gehäusekörper 120 angeordnet ist, sowie der zugehörige vierte dreiphasigen Anschlussflansch 164 sind in dieser Darstellung von dem Gehäusekörper 120 verdeckt und somit nicht sichtbar.

Der erste dreiphasige Anschlussstutzen 171 ist in axialer Richtung versetzt zu dem benachbarten zweiten dreiphasigen Anschlussstutzen 172 angeordnet. Ebenso ist der dritte dreiphasige Anschlussstutzen 173 in axialer Richtung versetzt zu dem benachbarten zweiten dreiphasigen Anschlussstutzen 172 angeordnet. Weiterhin ist der vierte dreiphasige Anschlussstutzen 174 in axialer Richtung versetzt zu dem benachbarten dritten dreiphasigen Anschlussstutzen 173 angeordnet.

In diesem Beispiel liegen der erste dreiphasige Anschlussstutzen 171 und der dritte dreiphasige Anschlussstutzen 173 sowie der zweite dreiphasige Anschlussstutzen 172 und der vierte dreiphasige Anschlussstutzen 174 je auf der gleichen Umfangslinie. Es ist auch denkbar, jeden der dreiphasigen Anschlussstutzen auf einer eigenen Unfangslinie anzuordnen, wodurch jeder der dreiphasigen Anschlussstutzen zu jedem anderen dreiphasigen Anschlussstutzen in axialer Richtung versetzt ist.

Trenner und Erder, welche in den Gehäusen der Sammelschienen in bekannter Weise angeordnet sind, sind hier nicht dargestellt. Ebenso sind die Phasenleiter hier nicht dargestellt.

**Bezugszeichenliste**

| | | | |
|---|---|---|---|
| 11 | erster Leistungsschalter | 52 | zweites Sammelschienengehäuse |
| 12 | zweiter Leistungsschalter | 53 | drittes Sammelschienengehäuse |
| 13 | dritter Leistungsschalter | 54 | viertes Sammelschienengehäuse |
| 14 | erster Antrieb | 61 | erster dreiphasiger Anschlussflansch |
| 15 | zweiter Antrieb | | |
| 16 | dritter Antrieb | 62 | zweiter dreiphasiger Anschlussflansch |
| 21 | Eingangsflansch des ersten Leistungsschalters | | |
| | | 63 | dritter dreiphasiger Anschlussflansch |
| 22 | Ausgangsflansch des ersten Leistungsschalters | | |
| | | 65 | Verbindungsflansch |
| 31 | Sammelschienenaufteilmodul | 66 | Adapterflansch |
| 32 | Abgangsaufteilmodul | 67 | Abgangsflansch |
| 33 | Dreifachsammelschienenaufteilmodul | 68 | Ausgangsflansch |
| | | 71 | Abgangsgehäuse |
| 35 | Steuerschrank | 72 | Winkelmodul |
| 41 | erster einphasiger Anschlussflansch | 73 | Schnellerder |
| | | 75 | Spannungswandler |
| 42 | zweiter einphasiger Anschlussflansch | 81 | erstes Hochspannungskabel |
| | | 82 | zweites Hochspannungskabel |
| 43 | dritter einphasiger Anschlussflansch | 83 | drittes Hochspannungskabel |
| | | 91 | erstes Verlängerungsrohr |
| 44 | vierter einphasiger Anschlussflansch | 92 | zweites Verlängerungsrohr |
| | | 93 | drittes Verlängerungsrohr |
| 45 | fünfter einphasiger Anschlussflansch | 94 | erster Antriebskasten |
| | | 95 | zweiter Antriebskasten |
| 46 | sechster einphasiger Anschlussflansch | 97 | Abgangsantriebskasten |
| | | 101 | Laufsteg |
| 51 | erstes Sammelschienengehäuse | 102 | Stelzen |
| 110 | Vierfachsammelschienenaufteilmodul | 171 | erster dreiphasiger Anschlussstutzen des Vierfachsammelschienenaufteilmoduls |
| 120 | Gehäusekörper des Vierfachsammelschienenaufteilmoduls | | |
| | | 172 | zweiter dreiphasiger Anschlussstutzen des Vierfachsammelschienenaufteilmoduls |
| 141 | erster einphasiger Anschlussflansch des Vierfachsammelschienenaufteilmoduls | | |
| | | 173 | dritter dreiphasiger Anschlussstutzen des Vierfachsammelschienenaufteilmoduls |
| 142 | zweiter einphasiger Anschlussflansch des Vierfachsammelschienenaufteilmoduls | | |
| | | 174 | vierter dreiphasiger Anschlussstutzen des Vierfachsammelschienenaufteilmoduls |
| 143 | dritter einphasiger Anschlussflansch des Vierfachsammelschienenaufteilmoduls | | |
| 151 | erster einphasiger Anschlussstutzen des Vierfachsammelschienenaufteilmoduis | | |
| 152 | zweiter einphasiger Anschlussstutzen des Vierfachsammelschienenaufteilmoduls | | |
| 153 | dritter einphasiger Anschlussstutzen des Vierfachsammelschienenaufteilmoduls | | |
| 161 | erster dreiphasiger Anschlussflansch des Vierfachsammelschienenaufteilmoduls | | |
| 162 | zweiter dreiphasiger Anschlussflansch des Vierfachsammelschienenaufteilmoduls | | |
| 163 | dritter dreiphasiger Anschlussflansch des Vierfachsammelschienenaufteilmoduls | | |
| 164 | vierter dreiphasiger Anschlussflansch des Vierfachsammelschienenaufteilmoduls | | |

## Patentansprüche

1. Metallgekapselte, gasisolierte Hochspannungsschaltanlage, umfassend
• mindestens eine in einem dreiphasig gekapselten Sammelschienengehäuse (51) angeordnete Sammelschiene,
• mindestens drei einphasig gekapselte Leistungsschalter (11, 12, 13), welche liegend angeordnet sind,
• ein Sammelschienenaufteilmodul (31, 33, 110), welches über mindestens einen dreiphasigen Anschlussflansch (61) und über drei einphasige Anschlussflansche (41, 42, 43) verfügt, zur Verbindung der Leistungsschalter (11, 12, 13) mit dem Sammelschienengehäuse (51) und
• ein Abgangsaufteilmodul (32), welches über mindestens einen dreiphasigen Flansch (65, 68) und über drei einphasige Anschlussflansche (44, 45, 46) verfügt, zur Verbindung der Leistungsschalter (11, 12, 13) mit einem dreiphasig gekapselten Abgangsgehäuse (71),
**dadurch gekennzeichnet, dass**
• das Sammelschienenaufteilmodul (31, 33, 110) sowie das Abgangsaufteilmodul (32) so angeordnet sind, dass die einphasigen Anschlussflansche (41, 42, 43, 44, 45, 46) nach unten weisen,
• einer der dreiphasigen Flansche des Abgangsaufteilmoduls (32) ein nach oben weisender Verbindungsflansch (65) ist,
• das Abgangsgehäuse (71) über einen nach oben weisenden Flansch verfügt,
• ein nach oben weisender Spannungswandler (75) entweder mit dem Abgangsgehäuse (71) verbunden ist oder an dem Verbindungsflansch (65) des Abgangsaufteilmoduls (32) bzw. an einem nach oben weisenden Adapterflansch (66) eines auf dem Abgangsaufteilmodul (32) vorgesehenen Winkelmoduls (72) befestigt ist, und
• der freie nach oben weisende Flansch zum Anschluss eines Prüfadapters zur Durchführung einer Hochspannungsprüfung zur Verfügung steht.

2. Hochspannungsschaltanlage nach Anspruch 1, **dadurch gekennzeichnet, dass** zu der mindestens einen Sammelschiene gehörende Trenner und Erder in dem Sammelschienengehäuse (51) angeordnet sind.

3. Hochspannungsschaltanlage nach einem der vorstehenden Ansprüche,
**dadurch gekennzeichnet, dass** zwischen dem Abgangsaufteilmodul (32) und den Leistungsschaltern (11, 12, 13) je ein Verlängerungsrohr (91, 92, 93) pro Phase vorgesehen ist.

4. Hochspannungsschaltanlage nach einem der vorstehenden Ansprüche,
**dadurch gekennzeichnet, dass** an dem Winkelmodul (72) ein Abgangsflansch (67) zum Anschluss des Abgangsgehäuses (71) vorgesehen ist.

5. Hochspannungsschaltanlage nach einem der vorstehenden Ansprüche,
**dadurch gekennzeichnet, dass** zwischen dem Sammelschienenaufteilmodul (31, 33, 110) und dem Abgangsaufteilmodul (32) ein Laufsteg vorgesehen ist, welcher sich parallel zu dem Sammelschienengehäuse (51) erstreckt.

6. Hochspannungsschaltanlage nach einem der vorstehenden Ansprüche,
**dadurch gekennzeichnet, dass** ein Steuerschrank (35) vorgesehen ist, welcher ein L-förmig ausgebildetes Gehäuse aufweist und welcher das Sammelschienengehäuse (51) teilweise übergreift.

7. Hochspannungsschaltanlage nach Anspruch 6, **dadurch gekennzeichnet, dass** der Steuerschrank (35) nur einen Teil der Breite eines Schaltfeldes einnimmt.

8. Hochspannungsschaltanlage nach einem der vorstehenden Ansprüche,
**dadurch gekennzeichnet, dass** an dem Sammelschienenaufteilmodul (110) mindestens vier dreiphasige Anschlussflansche (161, 162, 163, 164) vorgesehen sind.

9. Hochspannungsschaltanlage nach Anspruch 8, **dadurch gekennzeichnet, dass** das Sammelschienenaufteilmodul (110) einen annähernd zylinderförmigen Gehäusekörper (120) aufweist und dass an dem Sammelschienenaufteilmodul (110) mindestens vier dreiphasige Anschlussstutzen (171, 172, 173, 174) vorgesehen sind, welche in radialer Richtung aus dem Gehäusekörper (120) des Sammelschienenaufteilmoduls (110) herausragen, wobei an jedem Anschlussstutzen (171, 172, 173, 174) je ein dreiphasiger Anschlussflansch (161, 162, 163, 164) befestigt ist.

10. Hochspannungsschaltanlage nach Anspruch 8, **dadurch gekennzeichnet, dass** jeder der dreiphasigen Anschlussstutzen (171, 172, 173, 174) des Sammelschienenaufteilmoduls (110) zu dem jeweils benachbarten dreiphasigen Anschlussstutzen (171, 172, 173, 174) sowohl in axialer Richtung als auch in Umfangsrichtung bezüglich des Gehäusekörpers (120) versetzt angeordnet ist.

## Claims

1. Metal-encapsulated, gas-insulated high-voltage switchgear assembly, comprising
• at least one busbar arranged in a three-phase-encapsulated busbar housing (51),
• at least three single-phase-encapsulated circuit breakers (11, 12, 13), which are arranged horizontally,
• a busbar splitting module (31, 33, 110), which has at least one three-phase connecting flange (61) and three single-phase connecting flanges (41, 42, 43), for connection of the circuit breakers (11, 12, 13) to the busbar housing (51), and
• an outgoer splitting module (32), which has at least one three-phase flange (65, 68) and three single-phase connecting flanges (44, 45, 46), for connection of the circuit breakers (11, 12, 13) to a three-phase-encapsulated outgoer housing (71),
**characterized in that**
• the busbar splitting module (31, 33, 110) and the outgoer splitting module (32) are arranged such that the single-phase connecting flanges (41, 42, 43, 44, 45, 46) point downward,
• one of the three-phase flanges of the outgoer splitting module (32) is a connecting flange (65) which points upward,
• the outgoer housing (71) has a flange which points upward,
• a voltage converter (75), which points upward, is either connected to the outgoer housing (71) or is fastened to the connecting flange (65) of the outgoer splitting module (32) or to an adapter flange (66), which points upward, of an angle module (72) provided on the outgoer splitting module (32), and
• the free flange, which points upward, is available for connection of a test adaptor in order to carry out a high-voltage test.

2. High-voltage switchgear assembly according to Claim 1, **characterized in that** isolators and grounding means which are associated with the at least one busbar are arranged in the busbar housing (51).

3. High-voltage switchgear assembly according to one of the preceding claims, **characterized in that** one extension tube (91, 92, 93) is provided in each case for each phase, between the outgoer splitting module (32) and the circuit breakers (11, 12, 13).

4. High-voltage switchgear assembly according to one of the preceding claims, **characterized in that** an outgoer flange (67) for connection of the outgoer housing (71) is provided on the angle module (72).

5. High-voltage switchgear assembly according to one of the preceding claims, **characterized in that** a gangway is provided between the busbar splitting module (31, 33, 110) and the outgoer splitting module (32), and extends parallel to the busbar housing (51).

6. High-voltage switchgear assembly according to one of the preceding claims, **characterized in that** a control cabinet (35) is provided, which has an L-shaped housing and partially clasps the busbar housing (51).

7. High-voltage switchgear assembly according to Claim 6, **characterized in that** the control cabinet (35) occupies only a part of the width of a switch bay.

8. High-voltage switchgear assembly according to one of the preceding claims, **characterized in that** at least four three-phase connecting flanges (161, 162, 163, 164) are provided on the busbar splitting module (110).

9. High-voltage switchgear assembly according to Claim 8, **characterized in that** the busbar splitting module (110) has an approximately cylindrical housing body (120), and **in that** at least four three-phase connecting stubs (171, 172, 173, 174) are provided on the busbar splitting module (110) and project in the radial direction out of the housing body (120) of the busbar splitting module (110), with one three-phase connecting flange (161, 162, 163, 164) respectively being attached to each connecting stub (171, 172, 173, 174).

10. High-voltage switchgear assembly according to Claim 8, **characterized in that** each of the three-phase connecting stubs (171, 172, 173, 174) of the busbar splitting module (110) is arranged offset with respect to the respectively adjacent three-phase connecting stub (171, 172, 173, 174), both in the axial direction and in the circumferential direction with respect to the housing body (120).

## Revendications

1. Système de commutation à haute tension à isolation gazeuse sous enveloppe métallique, comprenant
* au moins une barre-bus disposée dans un boîtier de barre-bus (51) triphasé sous enveloppe,
* au moins trois commutateurs de puissance (11, 12, 13) monophasés sous enveloppe qui sont disposés en position horizontale,
* un module de distribution de barre-bus (31, 33, 110), lequel dispose d'au moins une bride de raccordement triphasée (61) et de trois brides de raccordement monophasées (41, 42, 43), destiné à relier les commutateurs de puissance (11, 12, 13) au boîtier de barre-bus (51) et
* un module de distribution de départ (32), lequel dispose d'au moins une bride triphasée (65, 68) et de trois brides de raccordement monophasées (44, 45, 46), destiné à relier les commutateurs de puissance (11, 12, 13) à un boîtier de départ (71) triphasé sous enveloppe, **caractérisé en ce que**
* le module de distribution de barre-bus (31, 33, 110) ainsi que le module de distribution de départ (32) sont disposés de telle sorte que les brides de raccordement monophasées (41, 42, 43, 44, 45, 46) sont orientées vers le bas,
* l'une des brides triphasées du module de distribution de départ (32) est une bride de liaison (65) orientée vers le haut,
* le boîtier de départ (71) dispose d'une bride orientée vers le haut,
* un convertisseur de tension (75) orienté vers le haut est soit relié au boîtier de départ (71), soit fixé à la bride de liaison (65) du module de distribution de départ (32) ou à une bride d'adaptation (66) orientée vers le haut d'un module coudé (72) présent sur le module de distribution de départ (32), et
* la bride libre orientée vers le haut destinée au raccordement d'un adaptateur d'essai est disponible pour effectuer un essai de haute tension.

2. Système de commutation à haute tension selon la revendication 1, **caractérisé en ce que** les sectionneurs et les prises de terre faisant partie de l'au moins une barre-bus sont disposés dans le boîtier de barre-bus (51).

3. Système de commutation à haute tension selon l'une des revendications précédentes, **caractérisé en ce qu'**un tube de prolongation (91, 92, 93) par phase se trouve respectivement entre le module de distribution de départ (32) et les commutateurs de puissance (11, 12, 13).

4. Système de commutation à haute tension selon l'une des revendications précédentes, **caractérisé en ce qu'**une bride de départ (67) destinée au raccordement du boîtier de départ (71) se trouve sur le module coudé (72).

5. Système de commutation à haute tension selon l'une des revendications précédentes, **caractérisé en ce qu'**une passerelle qui s'étend parallèlement au boîtier de barre-bus (51) se trouve entre le module de distribution de barre-bus (31, 33, 110) et le module de distribution de départ (32).

6. Système de commutation à haute tension selon l'une des revendications précédentes, **caractérisé en ce qu'**il existe une armoire de commande (35) qui possède un boîtier configuré en forme de L et qui recouvre partiellement le boîtier de barre-bus (51).

7. Système de commutation à haute tension selon la revendication 6, **caractérisé en ce que** l'armoire de commande (35) n'occupe qu'une partie de la largeur d'un tableau de distribution.

8. Système de commutation à haute tension selon l'une des revendications précédentes, **caractérisé en ce qu'**au moins quatre brides de raccordement triphasées (161, 162, 163, 164) se trouvent sur le module de distribution de barre-bus (110).

9. Système de commutation à haute tension selon la revendication 8, **caractérisé en ce que** le module de distribution de barre-bus (110) possède un corps de boîtier (120) de forme approximativement cylindrique et **en ce que** sur le module de distribution de barre-bus (110) se trouvent au moins quatre prises de raccordement triphasées (171, 172, 173, 174) qui font saillie dans le sens radial hors du corps de boîtier (120) du module de distribution de barre-bus (110), une bride de raccordement triphasée (161, 162, 163, 164) étant respectivement fixée à chaque prise de raccordement (171, 172, 173, 174) .

10. Système de commutation à haute tension selon la revendication 8, **caractérisé en ce que** chacune des prises de raccordement triphasées (171, 172, 173, 174) du module de distribution de barre-bus (110) sont disposées décalées par rapport aux prises de raccordement triphasées (171, 172, 173, 174) respectivement voisines, à la fois dans le sens axial et dans le sens circonférentiel par rapport au corps de boîtier (120).
